# NEUE EUROPÄISCHE PATENTSCHRIFT

(11) **EP 1 634 027 B2**
(45) Veröffentlichungstag und Bekanntmachung des Hinweises auf die Entscheidung über den Einspruch: **23.09.2009**
(45) Hinweis auf die Patenterteilung: 23.08.2006
(21) Anmeldenummer: 04740763.0
(22) Anmeldetag: 08.07.2004
(51) Int. Cl.: F27B 7/00, C22B 15/00

(54) **INDUSTRIEOFEN**
INDUSTRIAL OVEN
FOUR INDUSTRIEL

(30) Priorität: 30.08.2003 DE 10340087
(43) Veröffentlichungstag der Anmeldung: 15.03.2006
(73) Patentinhaber: MAERZ-GAUTSCHI INDUSTRIEOFENANLAGEN GMBH, 40215 Düsseldorf (DE)
(72) Erfinder: ZULEHNER, Uwe, 47906 Kempen (DE); RINNHOFER, Hans, 53881 Euskirchen (DE)
(74) Vertreter: Berkenbrink, Kai-Oliver
(86) Internationale Anmeldenummer: PCT/EP2004/007452
(87) Internationale Veröffentlichungsnummer: WO 2005/031234

(56) Entgegenhaltungen:
- WO-A-91/15607
- DE-A- 2 146 410
- DE-B- 1 031 473
- US-A- 1 856 716
- US-A- 4 245 821

## Beschreibung

Die Erfindung betrifft einen Industrieofen zum Schmelzen und zur Gasbehandlung von Nichteisenmetallen.

Aus dem Stand der Technik sind zur primär- und sekundärmetallurgischen Behandlung von Nichteisenmetallen, beispielsweise von Kupfer (hier beispielsweise zur Erzeugung von Anoden- oder Blister-Kupfer), Blei, Zink, Zinn, Nickel oder Aluminium oder Legierungen hiervon, verschiedene Ofentypen bekannt. Einer dieser Ofentypen ist der sogenannte Trommelofen, der insbesondere zur Raffination (also zur Oxidation und Reduktion) von Kupfer verwendet wird. Als weiterer Ofentyp ist beispielsweise der sogenannte Kippofen bekannt, der insbesondere zum Erschmelzen von Kupferschrotten aber auch zur Raffination der daraus gewonnenen Schmelze verwendet wird. Entsprechende Ofentypen sind auch zum Schmelzen, zur Behandlung und zur Verarbeitung von anderen Nichteisenmetallen bekannt.

Trommelöfen dienen insbesondere der Raffination flüssiger Nichteisenmetallschmelzen, die dem Trommelofen aus einem vorgeschalteten Schmelzofen zugeführt worden sind. Teilweise wird auch festes Rücklaufmaterial in den Ofen chargiert.

Ein Trommelofen gleicht im wesentlichen einem um seine horizontale Längsachse drehbaren und an seinen beiden axial endseitigen Abschnitten verschlossenen Stahlrohr. Auf seiner Innenseite ist das Rohr derart mit einem feuerfesten Material ausgekleidet, dass ein kreiszylindrischer, freier Innenraum verbleibt.

Dieser kreiszylindrische Innenraum bildet für die Nichteisenmetallschmelze auf seiner Unterseite eine Rinne, in der die Nichteisenmetallschmelze behandelt, also insbesondere beispielsweise raffiniert (oxidiert und reduziert), legiert oder homogenisiert werden kann.

Dieser Behandlungsprozess (also insbesondere die Raffination, Legierung und Homogenisierung) erfolgt im wesentlichen dadurch, dass aus Düsen, die unter der Badoberfläche der Nichteisenmetallschmelze liegen, sogenannten Unterbaddüsen, oder aus Lanzen, die von oben in die Schmelze eintauchen, Gas in die Schmelze gedüst wird.

Als Gas zur Oxidation der Kupfer- oder einer sonstigen Nichteisenmetallschmelze wird insbesondere Sauerstoff, Luft oder ein sonstiges Reaktionsgas, beispielsweise Chlorgas, verwendet, wobei das Gas, während es durch die Nichteisenmetallschmelze strömt, mit Fremdstoffen in dieser reagiert und sich entweder als entsprechendes Reaktionsprodukt auf der Oberfläche der Schmelze als Schlacke absetzt oder das Aggregat in Form von Flugstaub oder Prozessabgas verlässt. Flugstaub und Prozessabgas können das Aggregat beispielsweise durch den Brenngasabzug verlassen.

Zur Vergleichmäßigung der Nichteisenmetallschmelze kann durch die Düsen kumulativ oder alternativ ein Inertgas, beispielsweise Stickstoff oder Argon, in die Schmelze eingedüst werden, wobei das Inertgas bei seiner Strömung durch die Nichteisenmetallschmelze diese durchmischt und homogenisiert.

Für eine Reduktion einer Nichteisenmetallschmelze werden in diese ein Reduktionsgas, beispielsweise Erdgas, LPG, Ammoniak, Wasserstoff oder flüssige Kohlenwasserstoffe (Öle) eingedüst.

Eine effiziente Behandlung der Schmelze kann dabei nur dann erfolgen, wenn das Gas eine ausreichende Zeit durch die Schmelze strömt. Da die Zeit, die das Gas benötigt, um von ihrem Eindüsungspunkt an der Unterseite des Schmelzbades bis an dessen Oberfläche zu steigen, im wesentlichen von der Badhöhe bestimmt wird, ist eine Mindest-Badhöhe, bei der eine ausreichende Strömungszeit des eingedüsten Gases durch das Bad gewährleistet ist, erforderlich.

Um die Nichteisenmetallschmelze aus dem Trommelofen auszuleiten, weist dieser Öffnungen auf, aus denen die Nichteisenmetallschmelze ausfließen kann, nachdem der Ofen um einen so weiten Drehwinkel um seine Längsachse gedreht worden ist, bis die Nichteisenmetallschmelze diese Öffnungen erreicht hat.

Trommelöfen sind zur vorgenannten Behandlung von Nichteisenmetallschmelze durch Gaseindüsung gut geeignet, nicht jedoch zum Erschmelzen von Nichteisenschrotten oder Festmaterial im Einsatzgut. Denn ein rasches und effizientes Erschmelzen/Auflösen von Nichteisenschrotten wäre nur in den oberen Bereichen des Nichteisenschmelzbades, das unmittelbar von den oberhalb des Nichteisenschmelzbades in den freien Innenraum mündenden Brennern befeuert werden, effizient möglich. Aufgrund der erforderlichen Mindest-Badhöhe versinken die Nichteisenschrotte jedoch zuminde st teilweise in der Nichteisenmetallschmelze, sodass die Nichteis enschrotte insgesamt nicht schnell und effizient erschmolzen werden können beziehungsweise sich auflösen.

Zum Erschmelzen von Nichteisenschrotten wird daher vorzugsweise ein zusätzlicher Ofen benötigt. Als entsprechender Ofen zum Erschmelzen von Nichteisenschrotten oder festem Einsatzgut wird neben dem Schachtofen insbesondere der sogenannte (stationäre) Herdflammofen oder der (kippbare) Kippofen verwendet. In letzterem werden Nichteisenschrotte bei einer verhältnismäßig geringen Badhöhe und großer Badoberfläche der Nichteis enmetallschmelze erschmolzen. Eine ausreichende Raffination oder sonstige Behandlung der Nichteisenmetallschmelze durch Unterbaddüsen ist durch ein Kippen des Ofens zwar möglich, aufgrund der geringen Badhöhe jedoch relativ ineffizient. Um die Nichteisenmetallschmelze aus dem Kippofen auszuführen, kann dieser um wenige Winkelgrade gekippt werden.

US 1,856,716 offenbart einen Schmelzofen mit einem Konusförmigen Innenraum. Brennerseitig weist der Konus eine elliptische Querschnittsfläche auf. An der breiteren Seite des Konus münden Gasdüsen in den Innenraum.

Der Erfindung liegt die Aufgabe zugrunde, einen Industrieofen zur Verfügung zu stellen, in dem ein Nichteisenmetall, beispielsweise Kupfer, in effizienter Weise zum einen durch ein Gas behandelt, also insbesondere raffiniert und durchmischt, und zum anderen gleichzeitig aus Schrotten erschmolzen werden kann.

Zur Lösung dieser Aufgabe wird erfindungsgemäß ein Industrieofen zum Schmelzen und zur Gasbehandlung von Nichteisenmetallen mit den Merkmal en gemäß Patentanspruch 1 zur Verfügung gestellt.
Die Erfindung beruht auf der Erkenntnis, dass die bisher im wesentlichen zur Gasbehandlung von Nichteisenmetallen verwendeten Trommelöfen dahingehend optimiert werden können, dass sowohl der Verfahrensschritt des Schmelzens als auch das Raffinieren und Gasbehandeln jeweils effizienter realisiert werden können, wenn der Innenraum des Ofens einen nichtkreisförmigen Querschnitt aufweist.
Denn während das Verhältnis von Badoberfläche des Metallschmelzbades zu dessen Tiefe bei der Drehbewegung eines Trommelofens nach dem Stand der Technik - aufgrund der kreisförmigen Querschnittsfläche des Innenraums - auch bei einer Drehung des Ofens um seine Längsachse immer gleich bleibt, kann dieses Verhältnis bei einem Ofen, dessen Innenraum eine nichtkreisförmige Querschnittsfläche aufweist, durch eine Drehung des Ofens um seine Drehachse verändert werden.
Die Querschnittsfläche eines solchen Ofens ist derart dimensioniert, dass der Ofen in eine erste Stellung drehbar ist, in der das Verhältnis der Badoberfläche einer im Innenraum vorhandenen Nichteisenmetallschmelze (nachfolgend auch nur "Metallschmelze" genant) zu deren Tiefe größer ist (nachfolgend auch "Schmelzstellung" genannt) als in einer zweiten Stellung des Ofens (nachfolgend auch "Gasbehandlungsstellung" genannt), in die der Ofen ebenfalls drehbar ist.
Die Schmelzstellung zeichnet sich mithin dadurch aus, dass, bei gleichbleibendem Volumen der Schmelze, das Verhältnis der Badoberfläche der Schmelze zur Badhöhe (beziehungsweise dem Badvolumen) größer ist als in der Gasbehandlungsstellung.
Durch eine Drehung des Ofens um seine Drehachse ist der Ofen von seiner Schmelzstellung in seine Gasbehandlungsstellung hin und her drehbar. Bevorzugt ist vorgesehen, dass der Ofen mittels einer Drehung von 90° um seine Drehachse von seiner Schmelzstellung in seine Gasbehandlungsstellung hin und her drehbar; erfindungsgemäß hat sich jedoch herausgestellt, dass ab einer Drehung von 40° eine ausreichende Änderung des Verhältnisses der Badoberfl äche einer im Innenraum vorhandenen Metallschmelze zu deren Tiefe (beziehungsweise Volumen) erreicht werden kann, so dass ein Nichteisenmetall in der Schmelzstellung effizient erschmolzen und nach einer Drehung von 40° in der Gasbehandlungsstellung behandelt werden kann.
Anmeldungsgemäß ist daher vorgesehen, dass der erfindungsgemäße Industrieo fen um einen Drehwinkel von wenigstens 40° drehbar um die horizontal verlaufende Drehachse gelagert ist. Entsprechend kann der Ofen auch um einen Drehwinkel von wenigstens 50°, 70°, 90°, 120°, 160° oder 180° drehbar sein. Da die Drehbarkeit des Ofens auch dazu erforderlich ist, den Ofen in eine Stellung bringen zu können, in der die Metallschmelze aus einer Öffnung nach außen geleitet werden kann (Gießstellung), kann der Ofen beispielsweise auch um einen Winkel zwischen 40° und 120° oder zwischen 70° und 120° drehbar sein, um ihn zwischen der Schmelz- und der Gasbehandlungsstellung hin und her drehen zu können und um einen Winkel zwischen 40° und 180° oder zwischen 90° und 180° drehbar sein, um ihn zwischen der Schmelz- und der Gießstellung hin und her drehen zu können.
Der Ofen weist Einrichtungen zur Zuführung von Gas in den Innenraum, beispielsweise Unterbaddüsen, auf, durch die im Innenraum vorhandene Nichteisenmetallschmelze in der Gasbehandlungsstellung behandelbar ist. Kumulativ kann der Ofen wenigstens eine weitere Einrichtung zur Zuführung von Gas in den Innenraum aufweisen, durch die die Nichteisenmetallschmelze auch in der Schmelzstellung behandelbar ist.
Bei gleichbleibendem Volumen des Metallschmelzbades kann die Querschnittsfläche des Ofens derart dimensioniert sein, dass die Metallschmelze
- in der Schmelzstellung des Ofens eine so große Badoberfläche und eine so geringe Badtiefe aufweist, dass Nichteisenmetallschrott erschmolzen werden kann und dass sie
- in der Gasbehandlungsstellung eine so große Badhöhe aufweist, dass Gas, das in dieser Stellung durch die Einrichtungen zur Zuführung von Gas in den Innenraum an der Unterseite des Bades in das Metallschmelzbad eingedüst wird, ausreichend lange durch das Metallschmelzbad strömt, um dieses behandeln (also insbesondere raffinieren, legieren und durchmischen) zu können.

Da der Ofen von der Schmelzstellung in die Gasbehandlungsstellung hin und her drehbar ist, kann der erfindungsgemäß Ofen gleichzeitig als Ofen sowohl zum Erschmelzen als auch zur Gasbehandlung von Nichteisenmetallen verwendet werden.

Aufgrund seiner nichtkreisförmigen Querschnittsfläche weist der Innenraum des Ofens (zwangsläufig) unterschiedliche Durchmesser auf. Dabei kann vorgesehen sein, dass die Querschnittsfläche genau einen Maximaldurchmesser und genau einen Minimaldurchmesser aufweist. Gehen Maximaldurchmesser und Minimaldurchmesser entlang gekrümmter Linien (kontinuierlich) ineinander über, entspricht die Querschnittsfläche einer Ellipse oder einem Oval.

Der Maximaldurchmesser und der Minimaldurchmesser der Querschnittsfläche können nach einer bevorzugten Ausführungsform in einem Winkel von 90° zueinander verlaufen; grundsätzlich können beide Durchmesser jedoch in einem beliebigen Winkel zueinander verlaufen, beispielsweise in einem Winkel zwischen 30° und 90°, zwischen 60° und 90° oder zwischen 80° und 90° (die vorgenannten Winkelangaben beziehen sich jeweils auf den kleineren, zwischen beiden Durchmessern eingeschlossenen Winkel).

Der Innenraum des anmeldungsgemäßen Ofens weist eine elliptische oder ovale Querschnittsfläche auf. Bei einer elliptischen oder ovalen Querschnittsfläche des Innenraums kann die längere der beiden Hauptachsen der Ellipse beziehungsweise des Ovals beispielsweise zwischen 1,2 und 3 oder zwischen 1,6 und 2,4 mal länger sein als die kürzere der beiden Hauptachsen.

Nach einer bevorzugten Ausführungsform ist vorgesehen, dass der Maximaldurchmesser der Querschnittsfläche des Innenraums in der Schmelzstellung des Ofens horizontal angeordnet ist. Mit anderen Worten: In der Schmelzstellung verläuft die Badoberfläche einer Metallschmelze im Innenraum des Ofens parallel zum Maximaldurchmesser. Es kann aber auch jede andere, für das Schmelzen oder Raffinieren günstige Stellung eingenommen werden.

Entsprechend kann nach einer weiteren bevorzugten Ausführungsform vorgesehen sein, dass der Minimaldurchmesser der Querschnittsfläche des Innenraums in der Gasbehandlungsstellung des Ofens horizontal angeordnet ist. Mit anderen Worten: In der Gasbehandlungsstellung verläuft die Badoberfläche einer Metallschmelze im Innenraum des Ofens parallel zum Minimaldurchrnesser.

Bei einem Innenraum mit einer elliptischen oder ovalen Querschnittsfläche verläuft entsprechend die längere der beiden Hauptachsen in der Schmelzstellung des Ofens horizontal, wobei in der Gasbehandlungsstellung des Ofens die kürzere der Hauptachsen horizontal verläuft.

Der Innenraum des Ofens weist die Form eines Zylinders mit einer elliptischen oder ovalen Querschnittsfläche auf. Bei der letztgenannten Form des Innenraums kann die Zylinderachse parallel zur Drehachse des Ofens verlaufen.

Der Ofen weist Einrichtungen zur Zuführung von Gas in den Innenraum (nachfolgend auch nur "Gaszuführeinrichtung" genannt) auf. Das Gas dient zur Behandlung der Metallschmelze, also insbesondere deren Raffination, Legierung oder Durchmischung. Eine solche Gaszuführeinrichtung kann jeweils aus einer oder mehreren Düsen, beispielsweise Unterbaddüsen, oder Spülsteinen, die jeweils aus dem Stand der Technik zur Behandlung einer Metallschmelze bekannt sind, bestehen. Die Düsen beziehungsweise Spülsteine können jeweils einzeln oder in Gruppen zusammengefasst mit Gas beaufschlagbar sein.

Zur Oxidation der Metallschmelze im Innenraum des Ofens kann der Metallschmelze über die Gaszuführeinrichtung ein Reaktionsgas, insbesondere beispielsweise Luft, Sauerstoff, Chlorgas oder Mischungen daraus, zugeführt werden.

Zur Verbesserung der Durchmischung (Homogenisierung) beziehungsweise der Vergleichmäßigung der Metallschmelze kann durch die Gaszuführeinrichtungen kumulativ oder alternativ ein Inertgas, beispielsweise Stickstoff oder Argon, in die Metallschmelze eingeblasen werden.

Weiterhin können für eine Reduktion der Metallschmelze ein beliebiges geeignet es Reduktionsgas, beispielsweise Erdgas, LPG, Ammoniak, Wasserstoff oder flüssige Kohlenwasserstoffe (Öle) in die Metallschmelze eingeblasen werden.

Die Gaszuführeinrichtungen können insbesondere an zwei Bereichen in den Innenraum münden:
- Zum einen münden Gaszuführeinrichtungen (nachfolgend auch nur "Gasbehandlungsstellung-Gaszuführeinrichtungen" genannt) in einem Bereich in den Innenraum, der sich in der Gasbehandlungsstellung unterhalb der Badoberfläche des Schmelzbades befindet. Diese Gasbehandlungsstellung-Gaszuführeinrichtungen sind mithin dazu vorgesehen, der Metallschmelze in der Gasbehandlungsstellung Gas zuzuführen. Bevorzugt kann vorgesehen sein, dass sich die Gasbehandlungsstellung-Gaszuführeinrichtungen in der Schmelzstellung oberhalb der Badoberfläche des Schmelzbade befinden.
- Zum anderen können Gaszuführeinrichtungen (nachfolgend auch nur "Schmelzstellung-Gaszuführeinrichtungen" genannt) in einem Bereich in den Innenraum münden, der sich in der Schmelzstellung unterhalb der Badoberfläche des Schmelzbades befindet. Diese Schmelzstellung-Gaszuführeinrichtungen sind mithin dazu vorgesehen, der Metallschmelze in der Schmelzstellung Gas zuzuführen. Bevorzugt kann vorgesehen sein, dass sich die Schmelzstellung-Gaszuführeinrichtungen in der Gasbehandlungsstellung oberhalb der Badoberfläche des Schmelzbades befinden.

Durch die Schmelzstellung-Gaszuführeinrichtungen kann bereits in der Schmelzstellung des Ofens eine Vor-Raffination oder Vor-Durchmischung der Metallsch melze erreicht werden.

Die Gaszuführeinrichtungen münden jeweils entlang einer Strecke, also entlang einer Linie, in den Innenraum.

Bevorzugt sind die Einrichtungen zur Zuführung von Gas entlang mehrerer Strecken angeordnet.

Diese Strecken können beispielsweise im wesentlichen parallel zueinander und beispielsweise jeweils im wesentlichen parallel zur Drehachse verlaufen.

Sowohl die Schmelzstellung-Gaszuführeinrichtungen als auch die Gasbehandlungsstellung-Gaszuführeinrichtungen können jeweils entlang einer oder mehrerer Strecken in den Innenraum münden. Die Gasbehandlungsstellung-Gaszuführeinrichtungen können beispielsweise entlang mehrerer Strecken derart angeordnet sein, dass sie bezüglich benachbarter Strecken versetzt zueinander in den Innenraum münden; dadurch kann das Gas sehr gleichmäßig verteilt in die Nichteisenmetallschmelze geleitet werden. Gleiches gilt entsprechend für die Anordnung der Schmelzstellung-Gaszuführeinrichtungen.

Bevorzugt kann vorgesehen sein, dass der Bereich, in dem die Gasbehandlungsstellung-Gaszuführeinrichtungen in den Innenraum münden, und der Bereich, in dem die Schmelzstellung-Gaszuführeinrichtungen in den Innenraum münden, um einen definierten Drehwinkel versetzt zueinander angeordnet sind (als Bezugspunkt zur Bestimmung des Drehwinkels wird bei einem Bereich dessen parallel zur Drehachse verlaufende Mittenachse definiert). Dabei kann vorgesehen sein, dass diese beiden Bereiche beispielsweise um einen Drehwinkel zwischen 5° und 180° versetzt zueinander angeordnet sind, also beispielsweise auch um einen Drehwinkel zwischen 30° und 170° oder um einen Drehwinkel zwischen 70° und 150°.

Mit anderen Worten: Befindet sich der Ofen beispielsweise in der Schmelzstellung (und die Schmelzstellung-Gaszuführeinrichtungen damit in einer Position, in der sie derart unter dem Metallschmelzbad anordenbar sind, dass sie der Metallschmelze Behandlungsgas optimal zuführen können), muss der Ofen um einen wie vorstehend angegebenen Drehwinkel um seine Drehachse gedreht werden, bis er sich in der Gasbehandlungsstellung befindet (und die Gasbehandlungsstellung-Gaszuführeinrichtungen damit in einer Position, in der sie derart unter dem Metallschmelzbad anordenbar sind, dass sie der Metallschmelze Behandlungsgas optimal zuführen können).

Die Gasbehandlungsstellung-Gaszuführeinrichtungen sind an oder benachbart zu einem der beiden Schnittpunkte des Maximaldurchmessers der Querschnittsfläche des Innenraums mit der dem Innenraum zugewandten, aus der feuerfesten Auskleidung bestehenden Wandung des Innenraums angeordnet. Dadurch kann der Metallschmelze in der Gasbehandlungsstellung Behandlungsgas im Bereich der größten Badtiefe zugeführt werden.

In gleicher weise können die Schmelzstellung-Gaszuführeinrichtungen an oder benachbart zu einem der beiden Schnittpunkte des Minimaldurchmessers der Querschnittsfläche des Innenraums mit der dem Innenraum zugewandten, aus der feuerfesten Auskleidung bestehenden Wandung des Innenraums angeordnet sein. Dadurch kann der Metallschmelze in der Schmelzstellung Behandlungsgas im Bereich der größten Badtiefe zugeführt werden.

Die Drehachse kann durch den Innenraum des Ofens verlaufen.

Die Drehachse des Ofens kann koaxial zur Zylinderachse verlaufen. Nach einer anderen Ausführungsform ist vorgesehen, dass die Drehachse versetzt zur Zylinderachse des Innenraums verläuft.

Zur Befeuerung des Innenraums des Ofens weist dieser wenigstens einen Brenner auf. Der beziehungsweise die Brenner können an einer axial endseitigen Seitenfläche des Innenraums (Seitenwandbrenner) oder an einem axial endseitigen Bereich des Stahlmantels (Deckenbrenner) in den Innenraum münden. Die Deckenbrenner können an einem der Seitenfläche des Innenraums benachbarten Bereich in den Innenraum münden.

Soweit die Drehachse des Ofens durch den Innenraum des Ofens verläuft, kann vorgesehen sein, dass der beziehungsweise die Seitenwandbrenner an einer der beiden axial endseitigen Seitenflächen in den Innenraum münden, an denen die Drehachse die Auskleidung schneidet.

Dabei kann vorgesehen sein, dass der beziehungsweise die Seitenwand- oder Deckenbrenner nur an einem der beiden axial endseitigen Bereiche vorgesehen sind und an dem anderen axial endseitigen Bereich des Innenraums, eine Vorrichtung zum Abziehen der Brenngase aus dem Innenraum angeordnet ist. Diese Gasabziehvorrichtung kann entsprechend entweder an der Seitenfläche des Innenraums oder der Mantelfläche des Innenraums in den Innenraum münden. Bei dieser Ausführungsform werden die Brenngase entsprechend an einem axial endseitigen Bereich in den Innenraum des Ofens eingebracht und am gegenüberliegenden Ende abgezogen.

Als Brenner können beliebige nach dem Stand der Technik geeignete Brenner verwendet werden.

Alternativ kann statt eines Brenners eine Einrichtung zum induktiven Erschmelzen eines Nichteisenmetalls verwendet werdenn

Der anmeldungsgemäße Ofen kann wenigstens eine von außen in den Innenraum mündende Öffnung zur Zuführung eines Nichteisenmetalls in den Innenraum aufweisen. Diese Öffnung kann derart dimensioniert sein, dass dem Innenraum durch diese Öffnung sowohl eine Metallschmelze als auch Metallschrott zugeführt werden kann.

Der Industrieofen kann wenigstens eine weitere der folgenden, von außen in den Innenraum mündende Öffnungen aufweisen: Eine Öffnung zum Ausleiten eines flüssigen Nichteisenmetalls vom Innenraum nach außen oder eine Schlackenöffnung, durch die Schlacke aus dem Innenraum entfernt werden kann.

Es kann auch vorgesehen sein, dass dem Ofen nur durch eine einzige Öffnung sowohl ein Nichteisenmetall zugeführt als auch flüssiges Nichteisenmetall aus diesem ausgeleitet werden kann.

Die Öffnungen können durch ein Verschlusselement derart verschließbar sein, dass auch flüssige Metallschmelze nicht durch diese aus dem Innenraum nach außen dringen kann, wenn die Metallschmelze im Innenraum auf diesem Verschlusselement lastet, beispielsweise wenn sich das Verschlusselement beziehungsweise die Öffnung unterhalb der Badoberfläche befindet.

Der anmeldungsgemäße Industrieofen wird von einem äußeren Stahlmantel zusammengehalten.

Der Stahlmantel kann ein beliebige Querschnittsfläche aufweisen, beispielsweise eine elliptische, ovale, kreisförmige oder polygonale (also beispielsweise vier- oder achteckige) Querschnittsfläche.

Um den anmeldungsgemäßen Ofen um seine Längsachse zu drehen, kann grundsätzlich auf den bekannten Stand der Technik zum Drehen beziehungsweise Kippen eines Ofens zur Behandlung von Nichteisenmetallen zurückgegriffen werden.

Soweit der Stahlmantel - zumindest in seinem unteren Bereich - eine kreisförmige Querschnittsfläche aufweist, kann er hier auf einem Rollenbett gelagert sein und durch eine Drehung auf den Rollen um seine Drehachse gedreht werden.

Nach einer anderen Ausführungsform kann der Ofen kippbar gelagert und durch eine Kippvorrichtung, beispielsweise eine hydraulische Kippvorrichtung, um die Lagerung kippbar sein.

Auf der Innenseite des Stahlmantels ist eine feuerfeste Auskleidung, die den freien Innenraum umschließt, angeordnet. Für die Auswahl des Feuerfestmaterials dieser feuerfesten Auskleidung kann auf den bekannten Stand der Technik zur Auskleidung von Öfen für die Behandlung von Nichteisenmetallen zurückgegriffen werden. Beispielsweise können Magnesia-Chromsteine, Aluminiumsilikatsteine oder Siliziumcarbidsteine verwendet werden.

Bevorzugt ist die feuerfeste Auskleidung selbsttragend im Stahlmantel angeordnet. Eine entsprechende selbsttragende Anordnung von Feuerfestmaterial ist beispielsweise aus dem Stand der Technik zur Zustellung von Trommelöfen oder von Drehrohröfen (zum Brennen von Zementklinker) bekannt. Dabei müssen die Steine nicht durch etwaige Halterelemente an dem sie umgebenden Stahlmantel befestigt werden, sondern sie stützen sich in Form eines 360°-Bogens gegenseitig. Der Ofen könnte dadurch um 360° um seine Längsachse gedreht werden.

Der anmeldungsgemäße Industrieofen kann zur Behandlung eines beliebigen Nichteisenmetalls, beispielsweise von Kupfer, Blei, Nickel, Aluminium, Zinn oder Zink oder Legierungen hieraus verwendet werden. Bevorzugt kann er jedoch zur Behandlung von Kupfer verwendet werden.

Sämtliche der in dieser Anmeldung offenbarten Merkmale des anmeldungsgemäßen Industrieofens können beliebig miteinander kombiniert werden und zwar jeweils einzeln oder in Kombination miteinander.

Weitere Merkmale des Ofens ergeben sich aus den weiteren Anmeldungsunterlagen, insbesondere auch den Figuren.

Ein Ausführungsbeispiel des anmeldungsgemäßen Ofens wird in der nachfolgenden Figurenbeschreibung näher erläutert.

Dabei zeigt, jeweils in stark schematisierter Darstellung,
- Figur 1: eine Ansicht des Ofens von der Seite entlang eines Schnitts, parallel zur Drehachse;
- Figur 2: eine Ansicht des Ofens von oben entlang eines Schnitts an der Linie B-B gemäß Figur 1, parallel zur Drehachse;
- Figur 3: eine Ansicht des Ofens von der Seite entlang eines Schnitts an der Linie A-A gemäß Figur 1, senkrecht zur Drehachse;
- Figur 4: eine Ansicht des Ofens gemäß Figur 3, jedoch um einen Drehwinkel von 90° verdreht;
- Figur 5: eine Ansicht des Ofens gemäß Figur 3, jedoch um einen Drehwinkel von 147° verdreht.

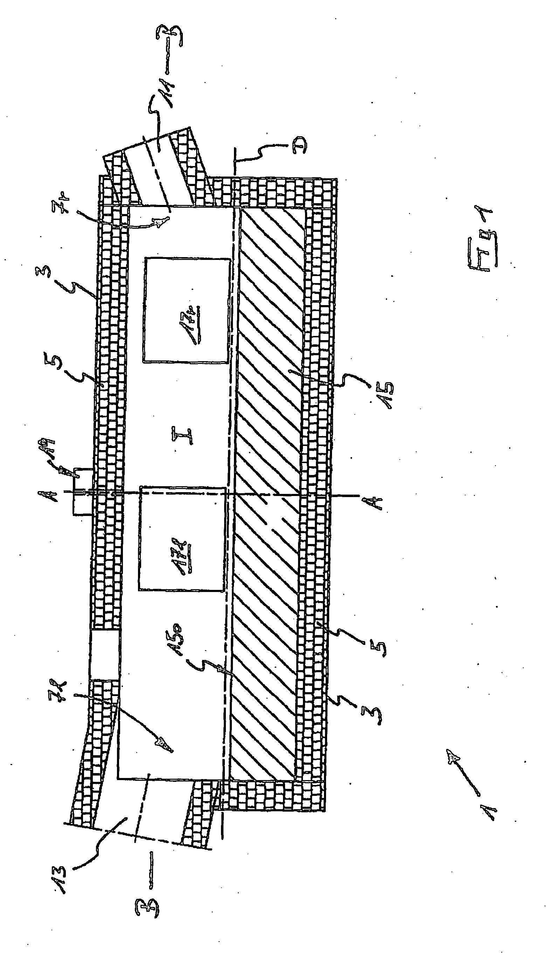

Der in Figur 1 in seiner Gesamtheit mit den Bezugszeichen 1 gekennzeichnete Ofen hat im wesentlichen die Außenform eines Zylinders mit einer ovalen Querschnittsfläche, wobei die Zylinderachse koaxial zur Drehachse D des Ofens 1 verläuft.

In Figur 1 befindet sich der Ofen 1 in der Schmelzstellung.

Der Ofen 1 weist einen äußeren Stahlmantel 3 auf, auf dessen Innenseite eine feuerfeste Auskleidung 5 aus einem Magnesia-Chrommaterial angeordnet ist, die einen freien Innenraum I umschließt.

Der Innenraum I weist ebenfalls die Form eines Zylinders mit einer ovalen Querschnittsfläche auf, wobei die Zylinderachse koaxial zur Drehachse D des Ofens 1 verläuft.

An einer seiner beiden axial endseitigen Seitenflächen 7r (in Figur 1 der rechten) münden zwei Seitenwandbrenner 9, 11 (in Figur 1 ist nur der Brenner 11 zu sehen) in den Innenraum I. An der gegenüberliegenden Seitenfläche 71 mündet eine Öffnung 13, durch die die Brennabgase sowie Reaktionsprodukte wie Flugstaub und Prozessabgas aus dem Innenraum I abgezogen werden können, in den Innenraum I.

Der Innenraum I bildet auf seiner Unterseite eine Rinne, in der sich eine Kupferschmelze 15, angedeutet durch eine Schraffur, befindet.

Die Mantelfläche des Ofens 1 weist mehrere Öffnungen 171, 17r, 19 auf, die jeweils durch den Stahlmantel 3 und die Auskleidung 5 hindurch in den Innenraum I münden.

In der Schmelzstellung gemäß Figur 1 münden die Öffnungen 13, 171, 17r, 19 sowie die Brenner 9, 11 oberhalb der Oberfläche 15o des Schmelzbades 15 in den Innenraum I.

Durch die Öffnungen 171, 17r kann der Ofen 1 mit einer Kupferschmelze und/oder mit Kupferschrott chargiert werden. Die Öffnungen 171, 17r befinden sich im seitlichen Bereich der Mantelfläche.

Die Öffnung 19 dient zur Ausleitung der Kupferschmelze 15 aus dem Innenraum I des Ofens 1. Die Öffnung 19 befindet sich im oberen Bereich der Mantelfläche.

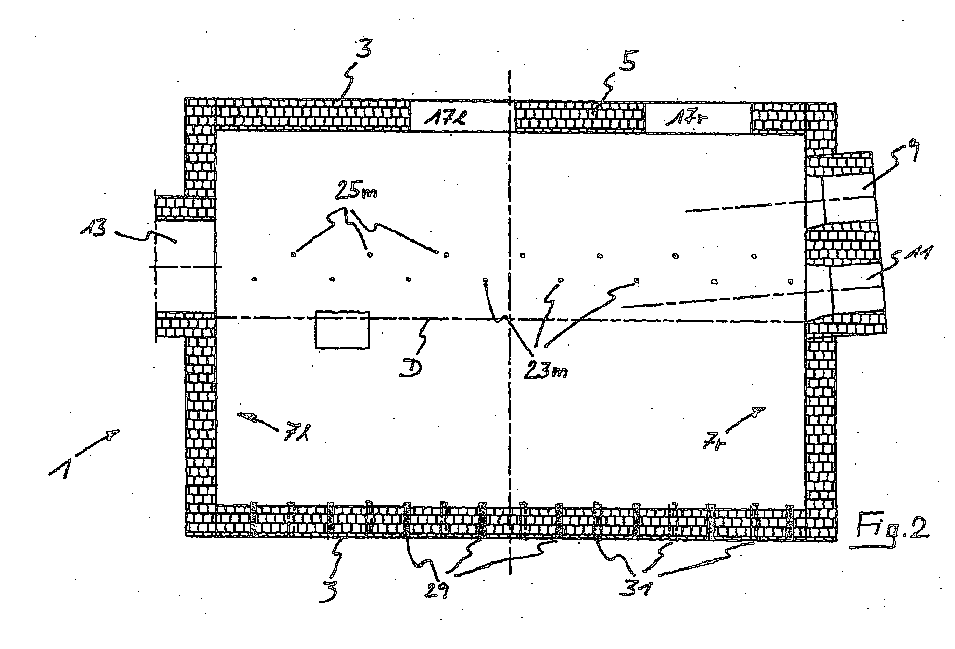

Figur 2 zeigt den Ofen 1 gemäß Figur 1 von oben, und zwar entlang der Schnittlinie B-B nach Figur 1.

Zu erkennen ist, dass die beiden Brenner 9, 11 seitlich zur Drehachse D versetzt in den Innenraum I münden.

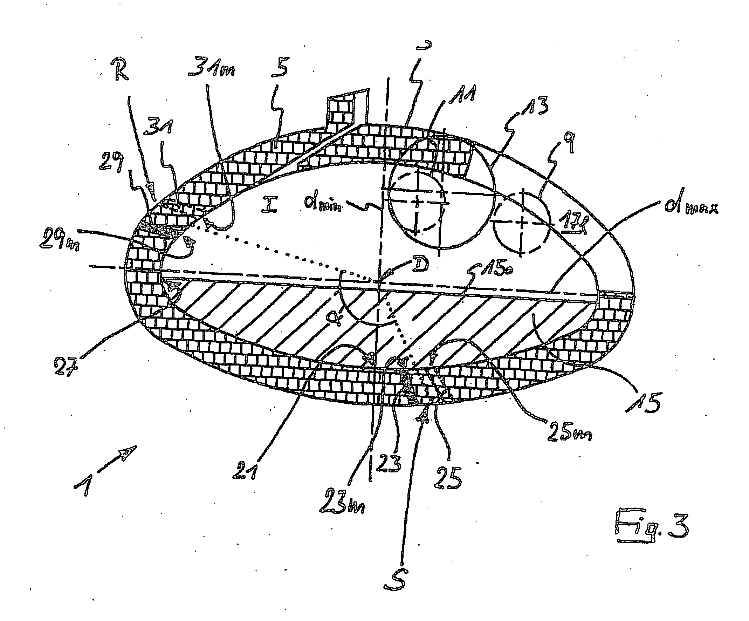

In Figur 3, die eine Ansicht des Ofens 1 auf einen Schnitt entlang der Linie A-A nach Figur 1 zeigt, ist die ovale Querschnittsfläche des Innenraums I zu erkennen.

Die kürzere Hauptachse (Minimaldurchmesser) der Querschnittsfläche des Innenraums I ist mit dₘᵢₙ und dessen längere Hauptachse (Maximaldurchmesser) mit dem Bezugszeichen dₘₐₓ gekennzeichnet ist. Die längere Hauptachse dₘₐₓ und die kürzere Hauptachse dₘᵢₙ stehen in einem Winkel von 90° zueinander.

Die Drehachse D des Ofens 1 steht senkrecht zur Zeichenebene und schneidet diese am Schnittpunkt der beiden Hauptachsen dₘᵢₙ, dₘₐₓ der Querschnittsfläche.

Wie zuvor ausgeführt, befindet sich der Ofen 1 in Figur 3 in seiner Schmelzstellung. Entsprechend verläuft die längere Hauptachse dₘₐₓ der Querschnittsfläche des Innenraums I horizontal und die kürzere Hauptachse dₘᵢₙ vertikal.

Benachbart zum unteren Schnittpunkt 21 der kürzeren Hauptachse dₘᵢₙ mit der dem Innenraum I zugewandten - durch die feuerfeste Auskleidung 5 gebildeten - Wandung des Innenraums I verläuft ein Bereich S, in dem mehrere Schmelzstellung-Gaszuführeinrichtungen in Form von Düsen 23, 25 in den Innenraum I münden.

Die Schmelzstellung-Gaszuführeinrichtungen 23, 25 sind dabei derart angeordnet, dass ein Teil hiervon mit deren Mündungspunkten 23m entlang einer ersten und der andere Teil hiervon mit deren Mündungspunkten 25m entlang einer zweiten Strecke in den Innenraum I münden. Die Mündungspunkte 23m, 25m sind dabei von Strecke zu Strecke versetzt zueinander angeordnet. Beide Strecken verlaufen in Figur 3 jeweils senkrecht zur Zeichenebene durch den Mündungspunkt 23m beziehungsweise 25m.

Beide Strecken verlaufen entsprechend parallel zur Drehachse D. Zur Verdeutlichung ist der Verlauf der Mündungspunkte 23m, 25m in Figur 2 angedeutet - wobei die Mündungspunkte in Figur 2 unterhalb der Zeichenebene liegen.

Benachbart zu einem seitlichen (hier linken) Schnittpunkt 27 der längeren Hauptachse dₘₐₓ mit der dem Innenraum I zugewandten Wandung des Innenraums I verläuft ein Bereich R, in dem mehrere Gasbehandlungsstellung-Gaszuführeinrichtungen in Form von Düsen 29, 31 in entsprechender Weise wie die Schmelzstellung-Gaszuführeinrichtungen 23, 25 in den Innenraum I münden.

Die beiden Strecken, entlang derer die Mündungspunkte 29m, 31m der Gasbehandlungsstellung-Gaszuführeinrichtungen 29, 31 angeordnet sind, verlaufen entsprechend ebenfalls parallel zur Drehachse D.

Während die Mündungspunkte 29m, 31m der Gasbehandlungsstellung-Gaszuführeinrichtungen 29, 31 in der Schmelzstellung gemäß Figur 3 oberhalb des Oberfläche 15o des Schmelzbades 15 in den Innenraum I münden, münden die Mündungspunkte 23m, 25m der Schmelzstellung-Gaszuführeinrichtungen 23, 25 in der Schmelzstellung gemäß Figur 3 selbstverständlich unterhalb der Oberfläche 15o des Schmelzbades 15 in den Innenraum I.

Der Bereich, in dem die Schmelzstellung-Gaszuführeinrichtungen 23, 25 in den Innenraum I münden, und der Bereich, in dem die Gasbehandlungsstellung-Gaszuführeinrichtungen 29, 31 in den Innenraum I münden, sind in Figur 3 um einen Drehwinkel a von 130° zueinander versetzt.

Zur Verdeutlichung sind die Gasbehandlungsstellung-Gaszuführeinrichtungen 29, 31 in Figur 2 dargestellt. Ein ersten Teil der Gasbehandlungsstellung-Gaszuführeinrichtungen- mit dem Bezugszeichen 29 - liegt in einer Ebene leicht oberhalb der Zeichenebene, ein anderer Teil Gasbehandlungsstellung-Gaszuführeinrichtungen - mit dem Bezugszeichen 31 - liegt versetzt hierzu in einer weiteren, über der vorgenannten Ebene liegenden Ebene.

Die Lage der Brenner 9, 11 und der Öffnung 13 ist durch Kreise angedeutet.

Gut zu erkennen in Figur 3 ist, dass die Metallschmelze 15 bei einer großen, dem Innenraum I zugewandten Badoberfläche 15o gleichzeitig nur eine geringe Badtiefe aufweist. Dadurch stehen die im freien Teil des Innenraums I vorhandenen Brenngase mit der in der Schmelzstellung verhältnismäßig großen Badoberfläche 15o der Metallschmelze 15 unmittelbar in Kontakt. Entsprechend kann die Metallschmelze 15 sehr rasch und effizient aufgeheizt und dadurch Kupferschrott schnell und effizient eingeschmolzen werden.

Gleichzeitig kann der Metallschmelze 15 durch die Schmelzstellung-Gaszuführeinrichtungen 23, 25 Gas zugeführt werden, um die Metallschmelze behandeln zu können. Da die Metallschmelze 15 jedoch nur eine verhältnismäßig geringe Badhöhe aufweist, strömen die in die Metallschmelze 15 eingedüsten Gase verhältnismäßig schnell bis zur Badoberfläche 15o des Metallschmelze 15 und verbleiben daher nur eine verhältnismäßig kurze Zeit in der Metallschmelze 15, sodass eine effiziente Behandlung der Metallschmelze 15 nicht stattfinden kann.

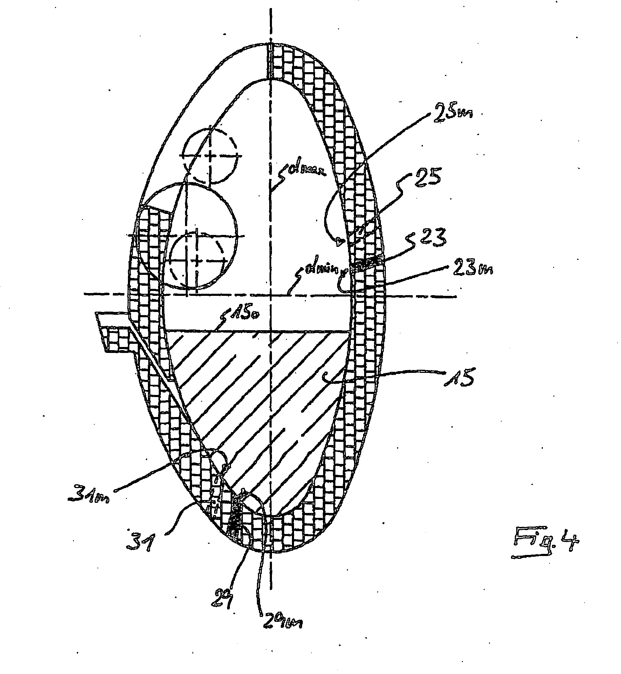

Um die Metallschmelze 15 effizient behandeln zu können, wird der Ofen 1 in die Gasbehandlungsstellung bewegt. Dazu wird der Ofen 1 aus seiner Schmelzstellung gemäß Figur 3 um 90° um seine Drehachse D entgegen dem Uhrzeigersinn gedreht, bis er sich in seiner in Figur 4 dargestellten Gasbehandlungsstellung befindet.

In der Gasbehandlungsstellung gemäß Figur 4 verläuft die kürzere Hauptachse dₘᵢₙ horizontal und die Mündungspunkte 29m, 31m der Gasbehandlungsstellung-Gaszuführeinrichtungen 29, 31 liegen unterhalb des Badoberfläche 15o, während die Mündungspunkte 23m, 25m der Schmelzstellung-Gaszuführeinrichtungen 23, 25 oberhalb der Badoberfläche 15o liegen.

In der Gasbehandlungsstellung kann der Metallschmelze 15 durch die Gasbehandlungsstellung-Gaszuführeinrichtungen 29, 31 nunmehr Behandlungsgas zugeführt werden, wobei eine effektive Raffination beziehungsweise Durchmischung dadurch bewirkt wird, dass die Badhöhe verhältnismäßig hoch ist und das Gas von den Mündungspunkten 29m, 31m der Gaseindüsung bis zur Badoberfläche 15o einen verhältnismäßig langen Weg durch die Metallschmelze 15 zurücklegt und daher eine verhältnismäßig lange Zeit hat, die Metallschmelze 15 effektiv zu behandlen.

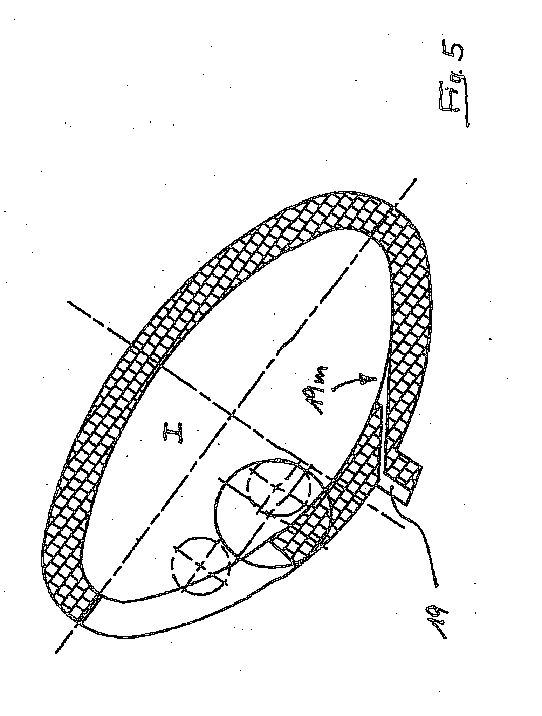

Bei einer Drehung des Ofens 1 um die Drehachse um weitere 57° entgegen dem Uhrzeigersinn (also um einen Drehwinkel von insgesamt 147° bezüglich der Schmelzstellung), befindet sich der Ofen 1 in seiner Gießstellung gemäß Figur 5. In dieser Stellung befindet sich der Mündungspunkt 19m der Öffnung 19 zum Ausleiten der Metallschmelze aus dem Innenraum I sowie deren Auslass auf der Außenseite des Ofens 1 unterhalb der Badoberfläche der Metallschmelze, so dass die Metallschmelze aus dem Innenraum I des Ofens 1 ausgeleitet werden kann.

## Patentansprüche

1. Industrieofen zum Schmelzen und zur Gasbehandlung von Nichteisenmetallen mit folgenden Merkmalen:
a) einem Stahlmantel (3);
b) einer auf der Innenseite des Stahlmantels (3) angeordneten, feuerfesten Auskleidung (5), die einen freien Innenraum (I) umschließt;
c) Einrichtungen (23, 25, 29, 31) zur Zuführung von Gas in den Innenraum (I), die entlang einer Strecke in den Innenraum münden;
d) wenigstens einem Brenner (9, 11) zur Befeuerung des Innenraums (I);
e) der Ofen (1) ist um einen Drehwinkel von wenigstens 40° drehbar um eine horizontal verlaufende Drehachse (D) gelagert;
f) der Innenraum (I) weist die Form eines Zylinders mit elliptischer oder ovaler Querschnittsfläche auf, wobei
g) die Einrichtungen (23, 25, 29, 31) zur Zuführung von Gas in den Innenraum (I) an oder benachbart zu einem oder beiden Schnittpunkten des Maximaldurchmessers der Querschnittsfläche des Innenraums (I) mit der dem Innenraum (I) zugewandten, aus der feuerfesten Auskleidung bestehenden Wandung des Innenraums (I) angeordnet sind.

2. Industrieofen nach Anspruch 1, bei dem die längere der beiden Hauptachsen der Ellipse beziehungsweise des Ovals zwischen 1, 2 und 3 mal länger ist als die kürzere der beiden Hauptachsen.

3. Industrieofen nach Anspruch 1, bei dem die Zylinderachse parallel zur Drehachse (D) verläuft.

4. Industrieofen nach Anspruch 1, bei dem die Drehachse (D) durch den Innenraum (I) verläuft.

5. Industrieofen nach Anspruch 1, bei dem die Drehachse (D) auf der Zylinderachse liegt.

6. Industrieofen nach Anspruch 1, bei dem die Drehachse (D) versetzt zur Zylinderachse verläuft.

7. Industrieofen nach Anspruch 1, bei dem der/die Brenner (9, 11) an einer axial endseitigen Seitenflächen (7r) des Innenraums (I) oder an einem axial endseitigen Bereich des Stahlmantels (5), beispielsweise auch als Deckenbrenner, in den Innenraums (I) mündet/münden.

8. Industrieofen nach Anspruch 7, bei dem an der anderen axial endseitigen Seitenfläche (71) des Innenraums (I) oder an dem anderen axial endseitigen Bereich des Stahlmantels (3) eine Vorrichtung (13) zum Abziehen der Brenngase aus dem Innenraum (I) angeordnet ist.

9. Industrieofen nach Anspruch 1, bei dem die Einrichtungen (23, 25, 29, 31) zur Zuführung von Gas in den Innenraum (I) an zwei Bereichen (S, R), die bezüglich der Drehachse (D) um einen Drehwinkel versetzt zueinander angeordnet sind, in den Innenraum (I) münden.

10. Industrieofen nach Anspruch 9, bei dem die beiden Bereiche (S, R) um einen Drehwinkel zwischen 5° und 180° versetzt zueinander angeordnet sind.

11. Industrieofen nach Anspruch 9, bei dem die beiden Bereiche (S, R) um einen Drehwinkel zwischen 30° und 170° versetzt zueinander angeordnet sind.

12. Industrieofen nach Anspruch 1, der wenigstens eine von außen in den Innenraum (I) mündende Öffnung (171, 17r) zur Zuführung eines Nichteisenmetalls in den Innenraum (I) aufweist.

13. Industrieofen nach Anspruch 1, der wenigstens eine von außen in den Innenraum (I) mündende Öffnung (19) zum Ausleiten eines flüssigen Nichteisenmetalls vom Innenraum (I) nach außen aufweist.

14. Industrieofen nach Anspruch 1, bei dem die Außenfläche des Stahlmantels (3) im wesentlichen die Form der Mantelfläche eines Kreiszylinders, eines Zylinders mit einer elliptischen Querschnittsfläche oder eines Zylinders mit einer ovalen Querschnittsfläche aufweist.

15. Industrieofen nach Anspruch 1, bei dem die feuerfeste Auskleidung (5) selbsttragend im Stahlmantel (3) angeordnet ist.

16. Industrieofen nach Anspruch 1, der um einen Drehwinkel von wenigstens 50° oder von wenigstens 70° um die Drehachse (D) drehbar ist.

## Claims

1. An industrial furnace for melting and for gas-treating nonferrous metals with the following features:
a) a steel jacket (3);
b) a refractory lining (5) provided on the inside of the steel jacket (3) surrounding a free interior (I);
c) devices (23, 25, 29, 31) for supplying gas into the interior (I) that open into the interior (I) along a distance;
d) at least one burner (9, 11) for firing the interior (I);
e) the furnace (1) is mounted to rotate about a horizontal axis of rotation (D) by an angle of rotation of at least 40°;
f) the interior (I) is in the shape of a cylinder having an elliptical or oval cross-sectional area, wherein
g) the devices (23, 25, 29, 31) for supplying gas into the interior (I) are arranged on or adjacent to one or the two points of intersection of the maximum diameter of the cross-sectional area of the interior (I) with the wall of the interior (I) made of the refractory lining facing the interior (I).

2. The industrial furnace according to Claim 1, wherein the longer of the two main axes of the ellipsis or the oval, respectively, is between 1.2 and 3 times longer than the shorter of the two main axes.

3. The industrial furnace according to Claim 1, wherein the axis of the cylinder runs parallel to the axis of rotation (D).

4. The industrial furnace according to Claim 1, wherein the axis of rotation (D) passes through the interior (I).

5. The industrial furnace according to Claim 1, wherein the axis of rotation lies on the axis of the cylinder.

6. The industrial furnace according to Claim 1, wherein the axis of rotation (D) is offset from the axis of the cylinder.

7. The industrial furnace according to Claim 1, wherein the burner(s) (9, 11) open(s) into the interior (I) on one of the axial faces (7r) of the interior (I) or on an axial end area of the steel jacket (5), e.g., also as a roof burner.

8. The industrial furnace according to Claim 7, wherein a device (13) for venting the combustion gases from the interior (I) is arranged on the other axial end face (71) of the interior (I) or on the other axial end area of the steel jacket (3).

9. The industrial furnace according to Claim 1, wherein the devices (23, 25, 29, 31) for supplying gas to the interior (I) open into the interior (1) at two areas (S, R) which are offset by an angle of rotation with respect to the axis of rotation (D) in relation to one another.

10. The industrial furnace according to Claim 9, wherein the two areas (S, R) are arranged so they are offset in relation to one another by an angle of rotation between 5° and 180°.

11. The industrial furnace according to Claim 9, wherein the two areas (S, R) are arranged so they are offset in relation to one another by an angle of rotation between 30° and 170°.

12. The industrial furnace according to Claim 1, having at least one opening (171, 17r) which opens into the interior (I) for supplying a nonferrous metal into the interior (I).

13. The industrial furnace according to Claim 1, having at least one opening (19) that opens into the interior (I) for discharging a molten nonferrous metal from the interior (I) to the outside.

14. The industrial furnace according to Claim 1, wherein the outside surface of the steel jacket (3) essentially has the shape of the lateral surface of a circular cylinder, a cylinder having an elliptical cross-sectional area or a cylinder having an oval cross-sectional area.

15. The industrial furnace according to Claim 1, wherein the refractory lining (5) is arranged in a self-supporting manner in the steel jacket (3).

16. The industrial furnace according to Claim 1, which is rotatable about the axis rotation (D) by an angle of rotation of at least 50° or at least 70°.

## Revendications

1. Four industriel pour la fusion et le gazage de métaux non ferreux avec les caractéristiques suivantes:
a) une enveloppe en acier (3);
b) un revêtement réfractaire (5) disposé sur la face intérieure de l'enveloppe en acier (3) entourant un espace intérieur (I) libre;
c) des dispositifs (23, 25, 29, 31) pour l'amenée de gaz dans l'espace intérieur (I), qui débouchent le long d'un parcours dans l'espace intérieur (I);
d) au moins un brûleur (9, 11) pour le chauffage de l'espace intérieur (I) ;
e) le four (1) est monté de manière à pivoter d'un angle de rotation d'au moins 40° autour d'un axe de rotation (D) s'étendant horizontalement ;
f) l'espace intérieur (I) présente la forme d'un cylindre avec une surface de section elliptique ou ovale,
g) les dispositifs (23, 25, 29, 31) pour l'amenée de gaz dans l'espace intérieur (I) étant disposés au niveau ou à proximité d'un ou de deux points d'intersection du diamètre maximal de la surface de section de l'espace intérieur (I) avec la paroi tournée vers l'espace intérieur (I) et composée du revêtement réfractaire de l'espace intérieur (I).

2. Four industriel selon la revendication 1, dans lequel le plus long des deux axes principaux respectivement de l'ellipse ou de l'ovale étant 1,2 à 3 fois plus long que le plus court des deux axes principaux.

3. Four industriel selon la revendication 1, dans lequel l'axe du cylindre s'étend parallèlement à l'axe de rotation (D).

4. Four industriel selon la revendication 1, dans lequel l'axe de rotation (D) s'étend à travers l'espace intérieur.

5. Four industriel selon la revendication 1, dans lequel l'axe de rotation (D) se trouve sur l'axe du cylindre.

6. Four industriel selon la revendication 1, dans lequel l'axe de rotation (D) est décalé par rapport à l'axe du cylindre.

7. Four industriel selon la revendication 1, dans lequel le ou les brûleurs (9, 11) débouche(nt) dans l'espace intérieur (I) sur une face d'extrémité axiale (7r) de l'espace intérieur (I) ou sur une zone d'extrémité axiale de l'enveloppe en acier (5), par exemple également en tant que brûleur en voûte.

8. Four industriel selon la revendication 7, dans lequel un dispositif (13) pour l'échappement des gaz de combustion de l'espace intérieur (I) est disposé sur l'autre face d'extrémité axiale (71) de l'espace intérieur (I) ou sur l'autre zone d'extrémité axiale de l'enveloppe en acier (3).

9. Four industriel selon la revendication 1, dans lequel les dispositifs (23, 25, 29, 31) pour l'amenée de gaz dans l'espace intérieur (I) débouchent, dans l'espace intérieur (I), dans deux zones (S, R) disposées l'une par rapport à l'autre de manière décalée d'un angle de rotation par rapport à l'axe de rotation (D).

10. Four industriel selon la revendication 9, dans lequel les deux zones (S, R) sont disposées l'une par rapport à l'autre de manière décalée d'un angle de rotation entre 5° et 180°.

11. Four industriel selon la revendication 9, dans lequel les deux zones (S, R) sont disposées l'une par rapport à l'autre de manière décalée d'un angle de rotation entre 30° et 170°.

12. Four industriel selon la revendication 1, muni d'au moins une ouverture (171, 17r) débouchant de l'extérieur dans l'espace intérieur (I), pour l'amenée d'un métal non ferreux dans l'espace intérieur (I).

13. Four industriel selon la revendication 1, muni d'au moins une ouverture (19) débouchant de l'extérieur dans l'espace intérieur (I), pour la sortie d'un métal non ferreux en fusion de l'espace intérieur (I) vers l'extérieur.

14. Four industriel selon la revendication 1, dans lequel la surface extérieure de l'enveloppe en acier (3) a sensiblement la forme de l'enveloppe d'un cylindre circulaire, d'un cylindre avec une surface de section elliptique ou d'un cylindre avec une surface de section ovale.

15. Four industriel selon la revendication 1, dans lequel le revêtement réfractaire (5) est disposé de manière autoportante dans l'enveloppe en acier (3).

16. Four industriel selon la revendication 1, pouvant pivoter d'un angle de rotation d'au moins 50° ou d'au moins 70° autour de l'axe de rotation (D).
